# EUROPEAN PATENT APPLICATION

(11) **EP 4 513 737 A1**
(43) Date of publication of application: **26.02.2025**
(21) Application number: 22949200.4
(22) Date of filing: 27.12.2022
(51) Int. Cl.: H02M 1/44, H02M 1/00, H02M 1/42, H02M 7/217, H02M 7/219

(54) **ISOLATED AC-DC CONVERTER, CHARGING DEVICE, AND POWER SUPPLY SYSTEM**

(30) Priority: 28.06.2022 CN 202210743957
(71) Applicant: Sungrow Power Supply Co., Ltd., Hefei, Anhui 230088 (CN)
(72) Inventor: ZHUANG, Jiacai, Hefei, Anhui 230088 (CN); XU, Jun, Hefei, Anhui 230088 (CN)
(74) Representative: Rooney, John-Paul
(86) International application number: PCT/CN2022/142477
(87) International publication number: WO 2024/001124

(57) **Abstract**

The present application discloses an isolated AC-DC converter, a charging device, and a power supply system. The isolated AC-DC converter comprises: a PFC filter, wherein an input end of the PFC filter is connected to an alternating current; a PFC circuit, wherein an input end of the PFC circuit is connected to an output end of the PFC filter, and an output end of the PFC circuit is connected to an input end of a DC-DC circuit; and the DC-DC circuit, comprising a transformer, wherein the transformer comprises: a primary winding, a secondary winding, and a first shielding layer; the first shielding layer is arranged between the primary winding and the secondary winding; the first shielding layer is connected to the PFC filter for preventing an interference signal from being transmitted to the secondary winding. In order to prevent an interference source from being transmitted to the secondary winding by means of the primary winding, the interference signal of the primary winding of the transformer is transmitted back to the PFC filter by means of the first shielding layer to form a common-mode loop for preventing the interference signal from being transmitted to the secondary winding. According to the solution, an EMC filter does not need to be additionally arranged, a shielding layer is additionally arranged, the implementation is easy, and the size and the volume are not greatly increased.

## Description

The present application claims priority to Chinese Patent Application No. 202210743957.X, titled "ISOLATED AC-DC CONVERTER, CHARGING DEVICE, AND POWER SUPPLY SYSTEM", filed on June 28, 2022 with the China National Intellectual Property Administration, which is incorporated herein by reference in its entirety.

### FIELD

The present application relates to the technical field of power electronics, and in particular to an isolating AC-DC converter, a charging device and a power supply system.

### BACKGROUND

At present, an isolating AC-DC converter adopts a two-stage architecture, with a first stage being a Power Factor Correction (PFC) circuit with a rectification function and a second stage being an isolating DC-DC circuit, which includes a transformer.

In practical applications, a primary winding and a secondary winding of the transformer may be connected in parallel with capacitors, or there may be a coupling capacitor between the primary winding and the secondary winding of the transformer. An interference source generated by the PFC circuit can be transferred to the secondary winding of the transformer through the capacitor, thereby forming a large common-mode loop channel, resulting in a decrease in the EMC performance of the isolating AC-DC converter.

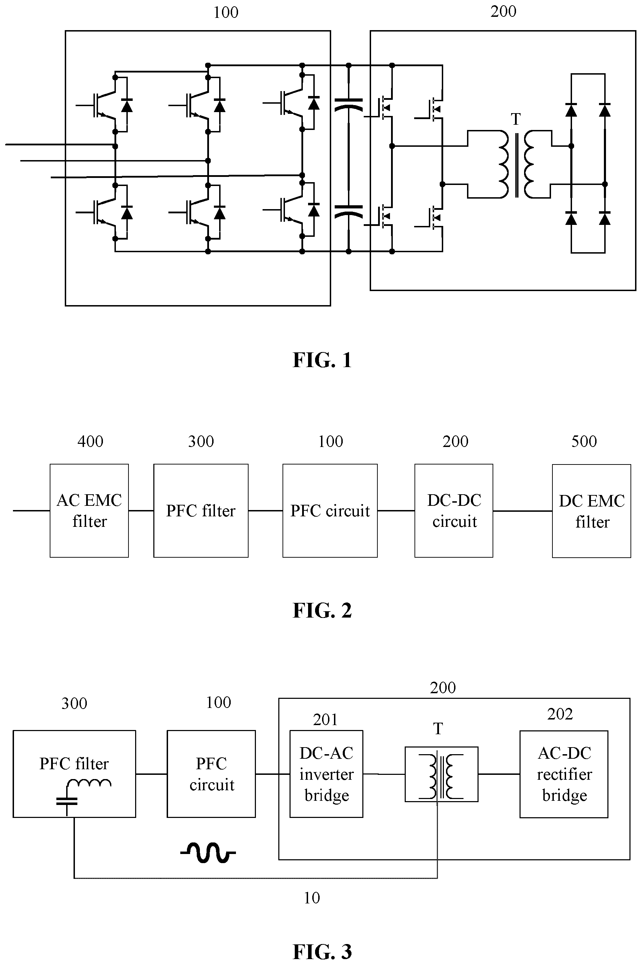

In order to improve the EMC performance, an AC EMC filter is added before the PFC circuit to increase the common-mode impedance. However, in order to meet the EMC standard, a high-impedance filter is required in the PFC circuit. In situations where the output needs to pass the EMC standard, it is also needed to add a high-impedance filter unit for the DC output as shown in FIG. 2. The high-impedance EMC filter unit will inevitably bring disadvantages such as an increased cost, increased size and weight.

### SUMMARY

In order to solve the above technical problems, an isolating AC-DC converter, a charging device and a power supply system are provided in the present application, which can improve the EMC performance without increasing the size and weight of the converter.

An isolating AC-DC converter is provided in the present application, including: a PFC filter, a PFC circuit and a DC-DC circuit; where,
an input terminal of the PFC filter is connected to an AC power;
an input terminal of the PFC circuit is connected to an output terminal of the PFC filter;
an output terminal of the PFC circuit is connected to an input terminal of the DC-DC circuit;
the DC-DC circuit comprises a transformer, and the transformer comprises a primary winding, a secondary winding, and a first shielding layer; and
the first shielding layer is disposed between the primary winding and the secondary winding, and the first shielding layer is connected to the PFC filter to form a common mode loop, to block an interference signal from being transferred to the secondary winding.

Preferably, the PFC filter includes a filter capacitor and a filter inductor; and
the input terminal of the PFC circuit is connected to a first end of the filter inductor, a second end of the filter inductor is connected to a first end of the filter capacitor, and a second end of the filter capacitor is connected to the first shielding layer.

Preferably, the PFC filter includes a filter capacitor and a filter inductor; and
the input terminal of the PFC circuit is connected to a first end of the filter inductor, a second end of the filter inductor is connected to a first end of the filter capacitor, and the second end of the filter inductor is connected to the first shielding layer.

Preferably, the isolating AC-DC converter further includes: a second shielding layer; and
the second shielding layer is disposed between the primary winding and the first shielding layer, the second shielding layer is connected to a DC bus of the DC-DC circuit, and the second shielding layer is used to suppress an interference signal caused by a switch transistor of the primary winding of the DC-DC circuit.

Preferably, isolating AC-DC converter further includes: a third shielding layer; and the third shielding layer is disposed between the secondary winding and the first shielding layer, and the third shielding layer is connected to an end of an output capacitor of the DC-DC circuit.

Preferably, the first shielding layer is a copper foil located between the primary winding and the secondary winding, and an end of the copper foil is connected to the PFC filter through an electrical connection line.

Preferably, the isolating AC-DC converter is a three-phase converter or a single-phase converter.

Preferably, the input terminal of the PFC circuit is used to connect to a three-phase alternating current power, and the PFC circuit comprises a three-level circuit or a two-level circuit; and
the DC-DC circuit comprises a DC-AC inverter bridge, the transformer and an AC-DC rectifier bridge; an input terminal of the DC-AC inverter bridge is connected to the output terminal of the PFC circuit, the primary winding of the transformer is connected to an output terminal of the DC-AC inverter bridge, and the secondary winding of the transformer is connected to an input terminal of the AC-DC rectifier bridge.

A charging device is further provided in the present application, including the isolating AC-DC converter described above; and it further includes: a controller; where,
the controller is used to control an output terminal of the isolating AC-DC converter to charge an electric device.

A power supply system is further provided in the present application, including the isolating AC-DC converter described above; and it also includes: a controller; where the controller is used to control an output terminal of the isolating AC-DC converter to power an electric device.

It can be seen that the present application has the following beneficial effects.

The isolating AC-DC converter provided by the present application includes: a PFC filter, a PFC circuit and a DC-DC circuit; where an input terminal of the PFC filter is connected to an AC power; an input terminal of the PFC circuit is connected to an output terminal of the PFC filter; an output terminal of the PFC circuit is connected to an input terminal of the DC-DC circuit; the DC-DC circuit comprises a transformer, and the transformer comprises a primary winding, a secondary winding, and a first shielding layer; and the first shielding layer is disposed between the primary winding and the secondary winding, and the first shielding layer is connected to the PFC filter to form a common mode loop, to block an interference signal from being transferred to the secondary winding, which reduces a common-mode current caused by the PFC circuit due to a coupling capacitance between the primary winding and the secondary winding of the transformer, and blocks an interference signal from being transferred to the secondary winding. In the present application, the specific position, to which the first shielding layer is connected, of the PFC filter is not specifically limited. For example, the first shielding layer may be connected to an end of the filter capacitor of the PFC filter, or it may be directly connected to a phase line of the AC input. Since the PFC filter generates an interference source, in order to prevent the interference source from being transferred to the secondary winding through the primary winding of the transformer, the interference signal of the primary winding of the transformer is transferred back to the PFC filter through the first shielding layer in the present application, thereby forming a common-mode loop and blocking the interference signal from being transferred to the secondary winding. In this solution, an additional EMC filter is not required, but only a shielding layer is added, which is easy to implement, and the size and volume will be not increased too much.

### BRIEF DESCRIPTION OF THE DRAWINGS

FIG. 1 is a schematic diagram of an isolating AC-DC converter;
FIG. 2 is a schematic diagram of an isolating AC-DC converter with an EMC filter;
FIG. 3 is a schematic diagram of an isolating AC-DC converter provided in an embodiment of the present application;
FIG. 4 is a circuit diagram of a specific isolating AC-DC converter of FIG. 3;
FIG. 5 is an equivalent circuit diagram provided in an embodiment of the present application;
FIG. 6 is a schematic diagram of another isolating AC-DC converter provided in an embodiment of the present application;
FIG. 7 is a schematic diagram of yet another isolating AC-DC converter provided in an embodiment of the present application;
FIG. 8 is a schematic diagram of still another isolating AC-DC converter provided in an embodiment of the present application;
FIG. 9 is a schematic diagram of another isolating AC-DC converter provided in an embodiment of the present application;
FIG. 10 is a schematic diagram of a PFC circuit provided in an embodiment of the present application;
FIG. 11 is a schematic diagram of another PFC circuit provided in an embodiment of the present application;
FIG. 12 is a schematic diagram of yet another PFC circuit provided in an embodiment of the present application;
FIG. 13 is a schematic diagram of a charging device provided in an embodiment of the present application; and
FIG. 14 is a schematic diagram of a power supply system provided in an embodiment of the present application.

### DETAILED DESCRIPTION

In order to make those skilled in the art to better understand the technical solution provided by the present application, specific application scenarios are introduced below.

An isolating AC-DC converter provided in an embodiment of the present application may be applied in many scenarios, such as communication power supply, and specifically it may be applied for powering a computer room. Further, it may also be applied to on-board chargers and charging stations. In the present application, a type of the load corresponding to the isolating AC-DC converter is not specifically limited.

The isolating AC-DC converter provided in embodiments of the present application may be a three-phase converter or a single-phase converter. The isolating AC-DC converter is introduced below as a three-phase converter for example.

Reference is made to FIG. 1, which is a schematic diagram of an isolating AC-DC converter.

The isolating AC-DC converter provided in the embodiments of the present application includes two stages, of which a first stage is a PFC circuit 100, and a second stage is a DC-DC circuit 200, where the DC-DC circuit 200 is isolating, that is, it includes a transformer T. A primary winding of the transformer T is connected to a DC-AC inverter bridge formed by a switch transistor, and a secondary winding of the transformer T is connected to an AC-DC rectifier bridge formed by a switch transistor.

Since the interference source generated by the PFC circuit may be transferred to the secondary winding of the transformer T through a capacitance or a coupling capacitance of the transformer T to cause common-mode interference, resulting in reduction in the EMC performance of the entire isolating AC-DC converter, generally, in order to improve the EMC performance, in the isolating AC-DC converter shown in FIG. 2, an AC EMC filter 400 is added before the PFC circuit 100, generally at an input terminal of the PFC filter 300, and sometimes a DC EMC filter 500 may be added at an output terminal of the DC-DC circuit 200. Since the EMC filter generally includes an inductor, the volume of the entire circuit will be larger, the weight will be increased accordingly, and the cost will be higher. The PFC filter 300 is a differential mode filter, which is mainly used to filter out differential mode interference.

In the isolating AC-DC converter provided in the embodiments of the present application, the EMC filter is not added, but a shielding layer is added between the primary winding and the secondary winding of the transformer, to shield the interference source of the PFC circuit, and prevent the interference signal from being transferred to the secondary winding of the transformer and a circuit of the secondary winding through the transformer to impose an impact on the load.

The isolating AC-DC converter provided in the embodiments of the present application is described in detail below in conjunction with the accompanying drawings.

Reference is made to FIG. 3, which is a schematic diagram of an isolating AC-DC converter provided in an embodiment of the present application.

The isolating AC-DC converter provided in this embodiment includes a PFC filter 300, a PFC circuit 100, and a DC-DC circuit 200; where,
an input terminal of the PFC filter 300 is connected to an AC power;
an input terminal of the PFC circuit 100 is connected to an output terminal of the PFC filter 300;
an output terminal of the PFC circuit 100 is connected to an input terminal of the DC-DC circuit 200; and
the DC-DC circuit 200 includes a transformer T, and the transformer T includes a primary winding, a secondary winding, and a first shielding layer 10.

A specific implementation form of a rectifier circuit and an inverter circuit in the DC-DC circuit 200 is not specifically limited in the embodiments of the present application, and it may be a full bridge or a half bridge. In the present embodiment, introduction will be specifically made by taking a DC-DC circuit 200 including a DC-AC inverter 201 and an AC-DC rectifier 202 as an example.

The first shielding layer 10 is disposed between the primary winding and the secondary winding. The first shielding layer 10 is connected to the PFC filter 300 to form a common mode loop, to block an interference signal from being transferred to the secondary winding.

In the embodiments of the present application, specific material of the first shielding layer 10 is not specifically limited, for example, it may be a conductive material such as a copper foil.

In the embodiments of the present application, a specific position, to which the first shielding layer 10 is connected, of the PFC filter 300 is not specifically limited. For example, the first shielding layer 10 may be connected to an end of a filter capacitor of the PFC filter 300. Since the PFC filter 300 generates an interference source, in order to prevent the interference source from being transferred to the secondary winding through the primary winding of the transformer T, the interference signal of the primary winding of the transformer T is transferred back to the PFC filter 300 through the first shielding layer 10 in the present application, thereby forming a common mode loop, to block the interference signal from being transferred to the secondary winding. In the present application, the specific position, to which the first shielding layer is connected, of the PFC filter is not specifically limited. For example, the first shielding layer may be connected to an end of the filter capacitor of the PFC filter, or it may be directly connected to a phase line of the AC input. In this solution, an additional EMC filter is not required, but only a shielding layer is added, which is easy to implement, and the size and volume will be not increased too much.

The secondary winding of the transformer T is connected to the AC-DC rectifier 202, and a secondary winding of the AC-DC rectifier 202 outputs DC to power the load.

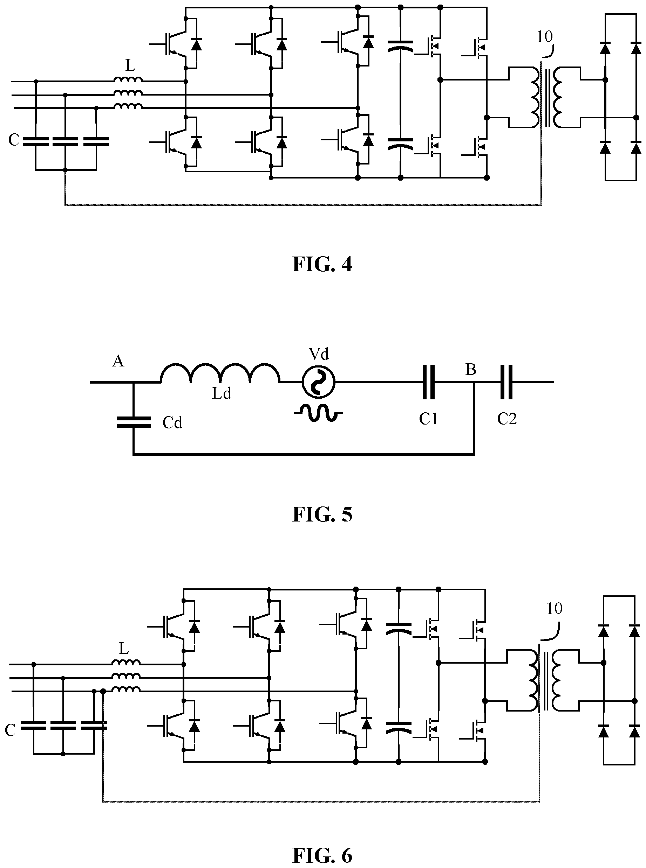

The isolating AC-DC converter shown in FIG. 4 is a specific implementation of FIG. 3.

FIG. 4 describes a three-phase isolating AC-DC converter as an example. It should be understood that the isolating AC-DC converter may also be a single-phase converter.

The filter circuit in FIG. 4 includes three filter capacitors C and three filter inductors L.

An input terminal of the PFC circuit is connected to a first end of the filter inductor L, a second end of the filter inductor L is connected to a first end of the filter capacitor C, and a second end of the filter capacitor C is connected to a first shielding layer 10.

The operating principle of the isolating AC-DC converter provided in the embodiments of the present application is introduced below in conjunction with FIG. 5.

Reference is made to FIG. 5, which is an equivalent circuit diagram provided in an embodiment of the present application.

The first capacitor C1 is a coupling capacitor between the primary winding of the transformer and the first shielding layer, which is generally tens of pF, and the second capacitor C2 is a coupling capacitor between the first shielding layer and the secondary winding of the transformer. Ld is an equivalent inductance of the PFC filter, and Cd is an equivalent capacitance of the PFC filter, which generally has an uF scale. The PFC filter mainly filters out a differential mode signal, and thus Ld may be referred to as a differential mode inductance and Cd may be referred to as a differential mode capacitance.

Vd is an interference source generated by the PFC circuit. According to the voltage division principle, a divided voltage of the interference source Vd between points A and B is low. If Ld is not considered, Cd in uF and C1 in tens of pF differ from each other by five orders of magnitude. It can be seen that a voltage component, leaked from the isolating AC-DC converter, of the interference source is only 1/100,000 of the original interference source, which reduces the interference of the interference source on the secondary side of the transformer. Meanwhile, because C1 is a capacitor in pF, an interference current generated by Vd in the loop is suppressed, suppressing a risk caused by an excessive interference current.

The second end of the first shielding layer 10 in FIG. 4 is connected to the capacitor of the PFC filter. In addition, the first shielding layer may also be directly connected to a phase line of one phase of the AC input.

Reference is made to FIG. 6, which is a schematic diagram of another isolating AC-DC converter provided in an embodiment of the present application.

The difference between FIG. 6 and FIG. 4 is that the second end of the first shielding layer 10 is connected to a different position.

The PFC filter includes a filter capacitor C and a filter inductor L.

An input terminal of the PFC circuit is connected to the first end of a filter inductor L, a second end of the filter inductor L is connected to a first end of the filter capacitor C, and a second end of the filter inductor L is connected to the first shielding layer 10.

Bothe of the first shielding layers in FIG. 4 and FIG. 6 described in the above embodiments may reduce the interference of the interference source on the secondary circuit of the transformer, and the second end thereof may be connected to a static point. That is, the interference source is led back to the static point, thereby reducing the current of the interference loop and protecting the circuit device, as long as one end of the first shielding layer is connected into the PFC filter or to the input terminal of the PFC filter.

In addition, in order to suppress the interference caused by the primary switch transistor of the DC-DC circuit, in an embodiment of the present application, a second shielding layer may be further added in the transformer, which is described in detail below in conjunction with the accompanying drawings.

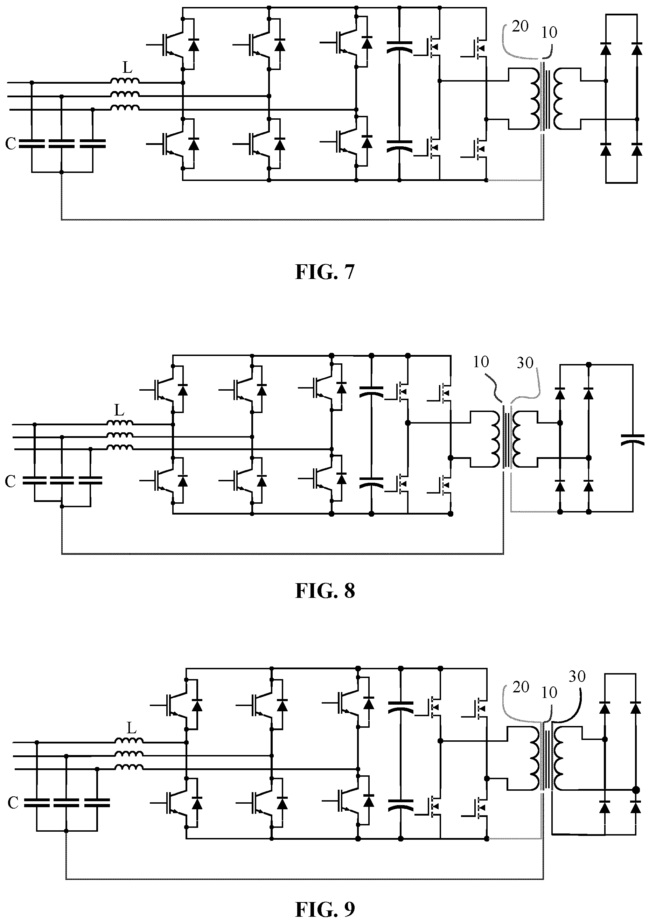

Reference is made to FIG. 7, which is a schematic diagram of yet another isolating AC-DC converter provided in an embodiment of the present application.

The isolating AC-DC converter provided in this embodiment further includes a second shielding layer 20.

The second shielding layer 20 is disposed between the primary winding and the first shielding layer 10, and the second shielding layer 20 is connected to a DC bus of a DC-DC circuit. The second shielding layer 20 is used to suppress an interference signal of the primary switch transistor of the DC-DC circuit.

In the embodiments of the present application, the material of the second shielding layer 20 is not specifically limited. For example, it may be the same as the material of the first shielding layer.

Specifically, in a possible implementation, the second end of the second shielding layer 20 may be connected to a negative terminal of the DC bus of the DC-DC circuit. That is, when the interference signal generated by the switch transistor of the DC-DC circuit is led back to the DC bus of the input end of the DC-DC circuit. It should be understood that the first shielding layer 10 may also isolate the interference of the primary winding of the DC-DC circuit to the secondary winding to a certain extent, that is, suppress the interference signal of the primary winding of the DC-DC circuit in the primary winding loop. However, the second shielding layer 20 added in this embodiment may better reduce the interference signal generated by the primary switch of the DC-DC circuit, reduce a number of devices affected by the interference signal and the area as surrounded, and further reduce the interference signal of the isolating AC-DC converter.

In addition, in order to suppress an influence of the secondary switch of the isolating DC-DC circuit on the primary winding of the transformer, in an embodiment of the present application, a third shielding layer may be added, and the third shielding layer is connected to a certain point of an output capacitor of the secondary winding of the transformer. The third shielding layer is located between the secondary winding and the first shielding layer.

Reference is made to FIG. 8, which is a schematic diagram of still another isolating AC-DC converter provided by an embodiment of the present application.

The isolating AC-DC converter provided by this embodiment further includes a third shielding layer 30.

The third shielding layer 30 is disposed between the secondary winding and the first shielding layer 10, and the third shielding layer 30 is connected to an end of an output capacitor of the DC-DC circuit, that is, to an output terminal of a rectifier connected with the secondary winding of the transformer of the DC-DC circuit, for example, a negative output terminal of the rectifier in FIG. 8. Since the output capacitor is connected to the output terminal of the rectifier, the second end of the third shielding layer 30 is also connected to an end of the output capacitor. The negative output terminal of the rectifier is also a static point, and introducing the interference signal into the static point may effectively reduce an influence by a rectifier tube in the rectifier on the primary winding of the transformer.

FIG. 8 only shows a situation where the first shielding layer 10 and the third shielding layer 30 are used in combination. It should be understood that the three shielding layers may be used in combination. Reference is made to FIG. 9, which is a schematic diagram of another isolating AC-DC converter provided by an embodiment of the present application.

FIG. 9 shows a situation where the first shielding layer 10, the second shielding layer 20, and the third shielding layer 30 are used in combination, which may not only shield the interference caused by the PFC filter, but also shield the interference caused by the primary switch and the secondary switch of the DC-DC circuit.

The above embodiments of the present application are introduced by taking the PFC circuit being a half-bridge circuit as an example. In addition, the PFC circuit may also be a circuit of other forms, and is not limited to a two-level circuit or a three-level circuit.

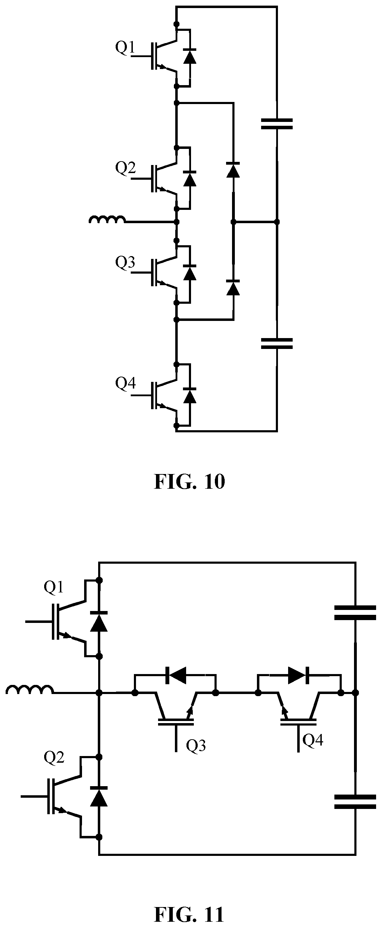

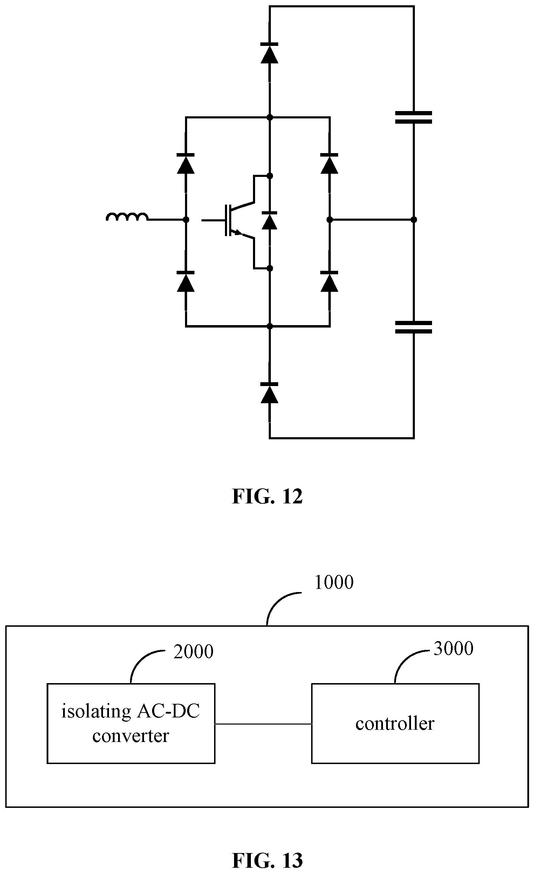

Reference is made to FIG. 10, which shows a three-level PFC circuit. The four switch transistors Q1-Q4 in FIG. 10 are controllable switch transistors. It should be understood that Q1 and Q4 may also be diodes. The circuit shown in FIG. 10 is an I-type three-level circuit, and may also be a T-type three-level circuit. Reference is made to FIG. 11, which includes four controllable switch transistors. It should be understood that Q1 and Q2 may be replaced by diodes. In addition, the PFC circuit may also be a circuit shown in FIG. 12.

Based on an isolating AC-DC converter provided in the above embodiments, a charging device is further provided in an embodiment of the present application, which is described in detail below in conjunction with the accompanying drawings.

Reference is made to FIG. 13, which is a schematic diagram of a charging device provided in an embodiment of the present application.

The charging device 1000 provided in this embodiment includes any of the isolating AC-DC converters 2000 described in the above embodiments; and it further includes: a controller 3000.

The controller 3000 is configured to control an output terminal of the isolating AC-DC converter to charge an electric device.

Since the charging device provided in the embodiments of the present application may better shield interference signals, it may provide a higher quality power supply for the load.

For example, the charging device may be a charging station or an on-board charger. When the charging device is a charging station, AC is input and DC is output, which is used to charge an electric vehicle.

When the charging device is an on-board charger, it may charge the vehicle while driving, such as an electric bus.

In the embodiments of the present application, an input voltage of the charging device is not specifically limited, and may be selected according to an actual scenario. The specific number of phases is not limited, and may be a single phase or three phases.

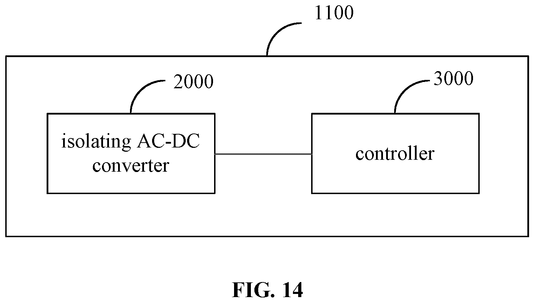

Reference is made to FIG. 14, which is a schematic diagram of a power supply system provided in an embodiment of the present application.

A power supply system 1100 is provided in an embodiment of the present application, including any of the isolating AC-DC converters 2000 described in the above embodiments; and it further includes: a controller 3000.

The controller 3000 is configured to control an output of the isolating AC-DC converter to supply power to an electric device.

For example, the electric device may be a load in a computer room, such as an air conditioner in a computer room, a server in a computer room, or a load in a digital center, and so on. The electric device may also be a communication device.

Since the power supply system provided by the embodiments of the present application may better shield interference signals, a higher quality power supply may be provided to the load.

The above description of the disclosed embodiments enables those skilled in the art to implement or use the present application. Various modifications to these embodiments will be apparent to those skilled in the art, and the general principles defined herein may be implemented in other embodiments without departing from the spirit or scope of the present application. Therefore, the present application will not be limited to the embodiments shown herein, but will conform to the broadest scope consistent with the principles and novel features disclosed herein.

## Claims

1. An isolating AC-DC converter, comprising a PFC filter, a PFC circuit, and a DC-DC circuit, wherein,
an input terminal of the PFC filter is connected to an AC power;
an input terminal of the PFC circuit is connected to an output terminal of the PFC filter;
an output terminal of the PFC circuit is connected to an input terminal of the DC-DC circuit;
the DC-DC circuit comprises a transformer, and the transformer comprises a primary winding, a secondary winding, and a first shielding layer; and
the first shielding layer is disposed between the primary winding and the secondary winding, and the first shielding layer is connected to the PFC filter to form a common mode loop, to block an interference signal from being transferred to the secondary winding.

2. The isolating AC-DC converter according to claim 1, wherein the PFC filter comprises a filter capacitor and a filter inductor; and
the input terminal of the PFC circuit is connected to a first end of the filter inductor, a second end of the filter inductor is connected to a first end of the filter capacitor, and a second end of the filter capacitor is connected to the first shielding layer.

3. The isolating AC-DC converter according to claim 1, wherein the PFC filter comprises a filter capacitor and a filter inductor; and
the input terminal of the PFC circuit is connected to a first end of the filter inductor, a second end of the filter inductor is connected to a first end of the filter capacitor, and the second end of the filter inductor is connected to the first shielding layer.

4. The isolating AC-DC converter according to any one of claims 1-3, further comprising a second shielding layer; and
the second shielding layer is disposed between the primary winding and the first shielding layer, the second shielding layer is connected to a DC bus of the DC-DC circuit, and the second shielding layer is used to suppress an interference signal caused by a switch transistor of the primary winding of the DC-DC circuit.

5. The isolating AC-DC converter according to any one of claims 1-4, further comprising a third shielding layer; and
the third shielding layer is disposed between the secondary winding and the first shielding layer, and the third shielding layer is connected to an end of an output capacitor of the DC-DC circuit.

6. The isolating AC-DC converter according to any one of claims 1 to 5, wherein the first shielding layer is a copper foil located between the primary winding and the secondary winding, and an end of the copper foil is connected to the PFC filter through an electrical connection line.

7. The isolating AC-DC converter according to any one of claims 1 to 5, wherein the isolating AC-DC converter is a three-phase converter or a single-phase converter.

8. The isolating AC-DC converter according to any one of claims 1-7, wherein the input terminal of the PFC circuit is used to connect to a three-phase alternating current power, and the PFC circuit comprises a three-level circuit or a two-level circuit; and
the DC-DC circuit comprises a DC-AC inverter bridge, the transformer and an AC-DC rectifier bridge; an input terminal of the DC-AC inverter bridge is connected to the output terminal of the PFC circuit, the primary winding of the transformer is connected to an output terminal of the DC-AC inverter bridge, and the secondary winding of the transformer is connected to an input terminal of the AC-DC rectifier bridge.

9. A charging device, comprising the isolating AC-DC converter according to any one of claims 1-8, and it further comprises: a controller; wherein,
the controller is used to control an output terminal of the isolating AC-DC converter to charge an electric device.

10. A power supply system, comprising the isolating AC-DC converter according to any one of claims 1-8; and it further comprises: a controller; wherein
the controller is used to control an output terminal of the isolating AC-DC converter to power an electric device.
